(19) Europäisches Patentamt
European Patent Office
Office européen des brevets

(11) **EP 2 551 662 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(51) Int Cl.:
*G01N 21/35* [(2014.01)] *G01N 21/37* [(2006.01)]

(21) Anmeldenummer: **12005326.9**

(22) Anmeldetag: **20.07.2012**

(54) **Optische Gasanalysatoreinrichtung mit Mitteln zum Verbessern der Selektivität bei Gasgemischanalysen**

Optical gas analysis device with resources to improve the selectivity of gas mixture analyses

Installation optique d'analyse de gaz avec des agents destinés à améliorer la sélectivité lors des analyses de mélanges de gaz

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2011 DE 102011108941**

(43) Veröffentlichungstag der Anmeldung:
**30.01.2013 Patentblatt 2013/05**

(73) Patentinhaber: **ABB Schweiz AG**
**5400 Baden (CH)**

(72) Erfinder:
• **Rathke, Carsten, Dr.**
**63450 Hanau (DE)**
• **Kappler, Jürgen, Dr.**
**60435 Frankfurt (DE)**

(74) Vertreter: **Maiwald Patent- und Rechtsanwaltsgesellschaft mbH**
**Grünstraße 25**
**40212 Düsseldorf (DE)**

(56) Entgegenhaltungen:
**US-A- 4 355 233**

EP 2 551 662 B1

## Beschreibung

Die Erfindung betrifft eine optische Gasanalysatoreinrichtung, umfassend mindestens eine in zumindest einer rohrförmigen Messküvette ausgebildete messgasdurchströmte Messkammer, welche mindestens eine eingangsseitig angeordnete infrarote Strahlungsquelle längs durchleuchtet, deren durch Absorptionsverluste abgeschwächter Lichtstrahl mindestens ein ausgangsseitig angeordneten opto-pneumatischen Detektor zur Gaskonzentrationsanalyse nach dem Prinzip der NDIR-Spektroskopie erfasst, wobei optische Mittel zum Verbessern der Selektivität bei Gasgemischanalysen vorgesehen sind.

Das Einsatzgebiet derartiger Gasanalysatoreinrichtungen, welche nach dem Prinzip der NDIR-Spektroskopie arbeiten, reicht von der Konzentrationsanalyse von Gasen - beispielsweise Kohlenmonoxid oder Kohlendioxid - zur Luftüberwachung bis hin zur Spurenmessung in komplexen Gasgemischen. Gerade hierfür bietet die NDIR-Spektroskopie gegenüber anderen Analyseverfahren, wie der FTIR-Spektroskopie oder der Gaschromatographie, mit wenig messtechnischem Aufwand eine geringe Nachweisgrenze, also Sensitivität.

Die Gasanalyse mit Hilfe von Gasanalysatoreinrichtungen, welche nach dem Prinzip der nicht-dispersiven Infrarotspektroskopie (NDIR) arbeiten, ist weit gebräuchlich. Der prinzipielle Aufbau einer Gasanalysatoreinrichtung ist stets gleich. Die von der infraroten Strahlungsquelle emittierte Lichtstrahlung durchstrahlt dabei eine das Messgas enthaltene Messküvette und trifft lichtaustrittsseitig auf einen fotoelektrischen Wandler, der meist als ein opto-pneumatischer Detektor ausgebildet ist. Die Erzeugung eines Detektorsignals mit ausreichendem Signal/Rausch-Verhältnis erfordert meist eine Modulation der von der Strahlungsquelle ausgehenden Lichtstrahlung. Auf dem Weg durch die Messküvette wird die von der Strahlungsquelle abgestrahlte Anfangsintensität durch Absorptionsprozesse abgeschwächt. Die Abschwächung hängt über das Lambert-Beer'sche Gesetz mit der Konzentration des absorbierten Gases zusammen.

Bei der hier interessierenden NDIR-Spektroskopie mit einem opto-pneumatischen Detektor wird gegenüber anderen NDIR-Gasanalysatoreinrichtungen eine besonders hohe Sensitivität und Selektivität erzielt. Diese messtechnisch günstigen Eigenschaften verdankt die Gasanalysatoreinrichtung dem speziellen Detektor, welcher mit der nachzuweisenden Messgaskomponente gefüllt ist. Bei periodischer Bestrahlung mit infrarotem Licht absorbieren die im Detektor enthaltenen Moleküle spezifische Energieanteile, welche über eine Schwingungsrelaxation zu einer Temperatur- und Druckerhöhung des Gases führen. Der opto-pneumatische Detektor ist also nur empfindlich in den Spektralbereichen, die genau den Absorptionsbanden des im Empfänger gespeicherten Gases entsprechen. Deshalb gelten diese NDIR-Gasanalysatoreinrichtungen auch als "Korrelations-Spektrometer", welche prinzipbedingt bereits eine sehr geringe Querempfindlichkeit gegenüber anderen im Messgas enthaltenen Gasen als der Detektorfüllung aufweisen.

Aus der DE 39 37 141 A1 geht eine gattungsgemäße optische Gasanalysatoreinrichtung hervor, die nach dem Prinzip der NDIR-Spektroskopie arbeitet. Es werden hier zur gleichzeitigen Messung der Konzentration mehrere Komponenten eines Messgases zwei nebeneinanderliegende Messküvetten verwendet, denen das Messgas bzw. ein Vergleichsgas zugeführt werden und die von modulierten infraroten Lichtstrahlen durchdrungen werden. Nach teilweiser Absorption in den Messküvetten gelangen die Lichtstrahlen auf einem hinter diesen angeordneten ersten opto-pneumatischen Detektor mit zwei in Strahlungsrichtung hintereinander angeordneten Kammern, in welchen eine erste Komponente der Gasprobe enthalten ist. Die beiden Kammern sind durch ein für die infraroten Lichtstrahlen transparentes Fenster getrennt. Ein baugleicher zweiter opto-pneumatischer Detektor ist hinter dem besagten ersten Detektor angeordnet, der mit einer zweiten Komponente der Gasprobe gefüllt ist. Zwischen dem ersten und dem zweiten Detektor ist ein spezieller Strahlungsfilter eingesetzt mit einer Transparenz für die Lichtstrahlen im Bereich schwächerer Strahlungsabsorption der zweiten Komponente der Gasprobe.

Hierdurch kann eine gleichzeitige Messung der Störkomponenten über den zweiten Detektor und anschließend eine rechnerische Korrektur der Querempfindlichkeiten durchgeführt werden. Für die Einbeziehung des zweiten opto-pneumatischen Detektors fällt jedoch ein entsprechend höherer Herstellungsaufwand an. Außerdem steigt der Betriebsaufwand durch die notwendige Wartung der zusätzlichen Messkanäle. Einschränkungen ergeben sich auch dadurch, dass die maximale Anzahl der Detektoren auf vier limitiert ist und viele Kombinationen von Detektoren durch notwendige optische Interferenzfilter vor den Detektoren nicht möglich sind.

Aus der DE 10 2004 031 643 A1 geht eine andere optische Gasanalysatoreinrichtung hervor, welche denselben Grundaufbau besitzt. Auch hier ist ein erster opto-pneumatischer Detektor mit einer ersten Komponente der Gasprobe gefüllt und ein hinter diesem angeordneter zweiter opto-pneumatischer Detektor ist mit der zweiten Komponente der Gasprobe gefüllt. Um die Querempfindlichkeit dieser Detektoranordnung zu verringern, wird vorgeschlagen, dass durch Einbau eines Gasfilters vor der Detektoreinrichtung diejenigen Strahlungsanteile vorabsorbiert werden, welche Störkomponenten absorbieren könnten.

Die DE 197 35 716 A1 offenbart eine andere technische Lösung für die Signalverarbeitung einer Mehrkomponentenmessung mit einer nach dem Prinzip der NDIR-Spektroskopie arbeitenden Gasanalysatoreinrichtung, welche mit nur einem opto-pneumatischen Detektor auskommt. Hierfür wird die Gasanalysatoreinrichtung auf die Erfassung mindestens zweier verschiedener Gaskomponenten sensitiv eingestellt, indem die Kammerverhältnisse und die Füllkonzentration des Detektors derart gewählt oder eingestellt werden, dass zwischen den Signalen der einzelnen Gaskomponenten eine Phasenverschiebung entsteht, die so bemessen wird, dass in einem verwendeten Zeitfenster der Signalauswertung das Integral des Wechselsignals bezüglich der jeweils einen zu messenden Gaskomponente maximal ist und das Integral der anderen Gaskomponente Null oder nahe Null ist. Hiermit wird eine Orthogonalisierung der Signalphasen für Mess- und Störkomponenten erreicht.

Zur Verringerung der Querempfindlichkeit bei Messungen mit opto-pneumatischen Detektoren sind aus dem allgemeinen Stand der Technik ferner Lösungen bekannt, die auf einer Ausblendung von Spektralbereichen mit überlappenden Absorptionen durch Einbau eines optischen Interferenzfilters vor dem opto-pneumatischen Detektor basieren. Weiterhin ist es bekannt, einen opto-pneumatischen Detektor als einen sogenannten Zweischicht-Empfänger mit zwei gasgefüllten hintereinander angeordneten Empfängerkammern aufzubauen, welche beide von der gleichen Strahlung durchstrahlt werden, aber gegenläufig auf das sensitive Element im Detektor wirken, der als Membrankondensator oder Mikroströmungsfühler ausgebildet sein kann. Ferner wird alternativ auch von einer sogenannten optischen Verlängerung der hinteren Detektorkammern bei solchen Zweischicht-Empfängern mit eines mehr oder minder reflektierenden Spiegels hinter den Detektoren Gebrauch gemacht, um die Querempfindlichkeit zu verringern.

Durch die vorstehend aufgeführten Lösungen kann allerdings die Selektivität immer nur gezielt für eine Störkomponente optimiert werden. Zudem gelingt eine vollständige Eliminierung der Querempfindlichkeitseinflüsse nur für eine spezielle Konzentration der jeweiligen Störkomponente. Es verbleiben also stets Restfehler, die umso größer sind, je mehr Störkomponenten die Messung beeinflussen.

Aus der US 4,355,233 ist eine optische Gasanalysatoreinrichtung nach dem NDIR-Prinzip, die Mittel zur Verbesserung der Messgenauigkeit aufweist, welche für jede spektrale Störkomponente jeweils einen separaten Festkörperdetektor hinter einem individuellen, schmalbandigen Filter innerhalb der Messzelle aufweist. Nachteiligerweise ist für jede spektrale Störkomponente im Messgas jeweils eine Filter/Detektoranordnung vorzusehen, welche in der Messzelle unterzubringen sind. Bei einer Mehrzahl von spektralen Störkomponente stellt diese Anordnung einen erheblichen Aufwand dar, der darüber hinaus der Miniaturisierung entgegen steht.

Es ist daher die Aufgabe der vorliegenden Erfindung, eine optische Gasanalysatoreinrichtung mit Mitteln zum Verbessern der Selektivität bei Gasgemischanalysen zu schaffen, welche einfach aufgebaut sind und bei der Analyse von Gasgemischen mit multiplen Begleitkomponenten eingesetzt werden können, welche im Empfängersignal Querempfindlichkeiten hervorrufen.

Die Aufgabe wird ausgehend von einer optischen Gasanalysatoreinrichtung gemäß Anspruch 1 gelöst. Die nachfolgenden abhängigen Ansprüche geben vorteilhafte Weiterbildungen der Erfindung wieder.

Die Erfindung schließt die technische Lehre ein, dass die optischen Mittel zur Verbesserung der Selektivität einen zusätzlichen Breitbandempfänger mit einem vorgeschalteten optischen Interferenzfilter umfassen, welcher in Ergänzung zum opto-pneumatischen Detektor zum Einsatz kommt, um die herrschenden Störeinflüsse durch Begleitkomponenten im Messgas zu unterdrücken.

Mit anderen Worten wird bei der Erfindung ein komplexes optisches Interferenzfilter zusammen mit einem spektralbreitbandig empfindlichen Detektor neben dem bisher üblichen opto-pneumatischen Detektor bei einer gattungsgemäßen Gasanalysatoreinrichtung eingesetzt. Der opto-pneumatische Detektor garantiert hierbei eine hohe Sensitivität bezüglich der Messkomponente; die zusätzlichen optischen Komponenten sind für eine hohe Unterdrückung der Störeinflüsse durch Begleitkomponenten im Messgas vorgesehen.

Das erfindungsgemäß vorgesehene optische Interferenzfilter ist als ein mehrere Durchlassbereiche aufweisendes sogenanntes Multivariate Optical Element (MOE) ausgebildet. Das optische Interferenzfilter ist somit nicht nur auf einen einzigen Durchlassbereich beschränkt. Die mehreren Durchlassbereiche des Interferenzfilters sind jeweils einzeln gezielt derart optimiert, dass eine Gewichtung der Strahlungsanteile nach einem vorher bestimmten Muster möglich ist. Ein derartiges Muster kann beispielsweise der gewünschten Durchlasskurve entsprechen.

Als Breitbandempfänger kommt vorzugsweise ein pyroelektrischer Detektor zur Anwendung. Alternativ hierzu ist es jedoch auch möglich, durch spezielle Gasfüllungen künstlich spektralbreitbandig empfindlich gemachte opto-pneumatische Detektoren zu verwenden. Es sind jedoch auch andere pyroelektrische Detektoren basierend auf der Grundlage des pyroelektrischen Effekts möglich. Die Detektoren bestehen aus ferroelektrischen Kristallen oder Keramiken mit unsymmetrischem Kristallaufbau. Aufgrund dieser Unsymmetrie besitzen solche Materialien ein elektrisches Dipolmoment und damit eine permanente Polarisation. Bei Erwärmung dieser Materialien durch infrarote Strahlung verändern sich die Abstände im Kristallgitter und damit auch die Dipolmomente und die Polarisation. Hierdurch entstehen Ladungen auf der Oberfläche, die als elektrisches Signal abgegriffen werden können. Dieses elektrische Signal ist proportional zur Änderung der Strahlungseinleitung. Vorrangig wird als Grundmaterial für pyroelektrische Detektoren dotiertes Triglycinsulfat (DTGS) verwendet. Ein solcher DTGS-Detektor ist mit einem sehr großen Frequenzbereich einsetzbar, ist einfach aufgebaut und besitzt schnelle Ansprechzeiten, so dass dieser für den erfindungsgegenständlichen Breitbandempfänger besonders geeignet ist. Alternativ hierzu ist es jedoch auch möglich durch spezielle Gasfüllungen künstlich spektralbreitbandig empfindlich gemachte opto-pneumatische Detektoren zu verwenden.

Gemäß einer weiteren die Erfindung verbessernden Maßnahme die spezielle Signalverarbeitung der erfindungsgemäßen Gasanalysatoreinrichtung betrifft, wird vorgeschlagen, dass ein vom opto-pneumatischen Detektor ausgegebenes, der Erfassung der zu messenden Gaskomponente dienendes erstes Signal $S_1$ und ein vom Breitbandempfänger ausgegebenes, proportional zur gemessenen Querempfindlichkeit am opto-pneumatischen Detektor ausgebildetes zweites Signal $S_2$ eingangsseitig an eine elektronische Auswerteeinheit zur Korrektur des ersten Signals $S_1$ mit Hilfe des zweiten Signals $S_2$ geleitet sind. Im Prinzip kann diese Korrektur durch Subtraktion des zweiten Signals $S_2$ vom ersten Signal $S_1$ erfolgen. Erfasst beispielsweise der opto-pneumatische Detektor das Messgas Kohlenmonoxid als erstes Signal $S_1$, so wird über den Breitbandempfänger, welcher über das vorgeschaltete optische Interferenzfilter spektral selektiv gemacht wird, das zweite Signal $S_2$ auf diese Weise zur Korrektur erzeugt. Durch Tests konnte nachgewiesen werden, dass diese Signalverarbeitung zu hochwertigen Messergebnissen selbst bei hochkomplexen Gasgemischen führt. Dabei kann die erforderliche Signalverarbeitung der Signale $S_1$ und $S_2$ relativ einfach durchgeführt werden.

In der Praxis ist zu berücksichtigen, dass unter Umständen die charakteristischen Absorptionen der Störkomponenten bei Verwendung der für die Messung von Spuren des Messgases notwendigen langen Messküvetten so stark werden, dass aufgrund der mathematischen Zusammenhänge nicht-lineare Absorptionseffekte auftreten, welche das Messergebnis stark verfälschen würden. Um diesen Fehler auszuschließen, wird gemäß einer speziellen Ausführungsform der optischen Gasanalysatoreinrichtung der Breitbandempfänger mit dem vorgeschalteten optischen Interferenzfilter auf einen zweiten Strahlengang gebaut, der neben einem ersten Strahlengang angeordnet ist, welcher dem opto-pneumatischen Detektor zugeordnet ist. Der zweite Strahlengang kann dabei mit einer relativ kürzeren Messküvette bestückt werden. Somit ist der Breitbandempfänger mit vorgeschaltetem optischen Interferenzfilter räumlich neben dem opto-pneumatischen Detektor angeordnet.

Nach einer anderen und bevorzugten Ausführungsform der optischen Gasanalysatoreinrichtung ist eine einzige Messküvette vorgesehen, an deren lichtausgangsseitigem Ende der Breitbandempfänger mit dem vorgeschalteten optischen Interferenzfilter angeordnet ist, welchem der opto-pneumatische Detektor in Lichtstrahlrichtung folgt. Somit sind der Breitbandempfänger und der opto-pneumatische Detektor hintereinander auf derselben Lichtachse angeordnet.

Vorzugsweise besitzt die Messküvette bei den beiden vorstehend beschriebenen bevorzugten Ausführungsformen mehrere Kammern. Insoweit ist längs neben der messgasdurchströmten Messkammer M eine mit einem referenzgasgefüllte Referenzkammer R zur Kalibrierung angeordnet.

Die vorstehend erwähnte Signalverarbeitung lässt sich vorzugsweise softwaretechnisch realisieren, indem die elektronische Auswerteeinheit mit einem Signalverarbeitungsalgorithmus zur Korrektur des ersten Signals $S_1$ des opto-pneumatischen Detektors mit Hilfe des zweiten Signals $S_2$ des Breitbandempfängers betrieben wird. Die Routine des Signalverarbeitungsalgorithmus ist dabei durch entsprechende in der Software hinterlegte Steuerungsbefehle umgesetzt.

Weitere die Erfindung verbessernde Maßnahmen werden nachstehend gemeinsam mit der Beschreibung zweier bevorzugter Ausführungsbeispiele der Erfindung anhand der Figuren näher dargestellt. Es zeigt:

Fig. 1    eine schematische Darstellung einer ersten Ausführungsform der optischen Gasanalysatoreinrichtung mit einer einzigen Messküvette,

Fig. 2    eine schematische Darstellung einer zweiten Ausführungsform der optischen Gasanalysatoreinrichtung mit zwei Messküvetten, und

Fig. 3    eine Blockschaltbilddarstellung der Signalverarbeitung der gemessenen Signale $S_1$ und $S_2$.

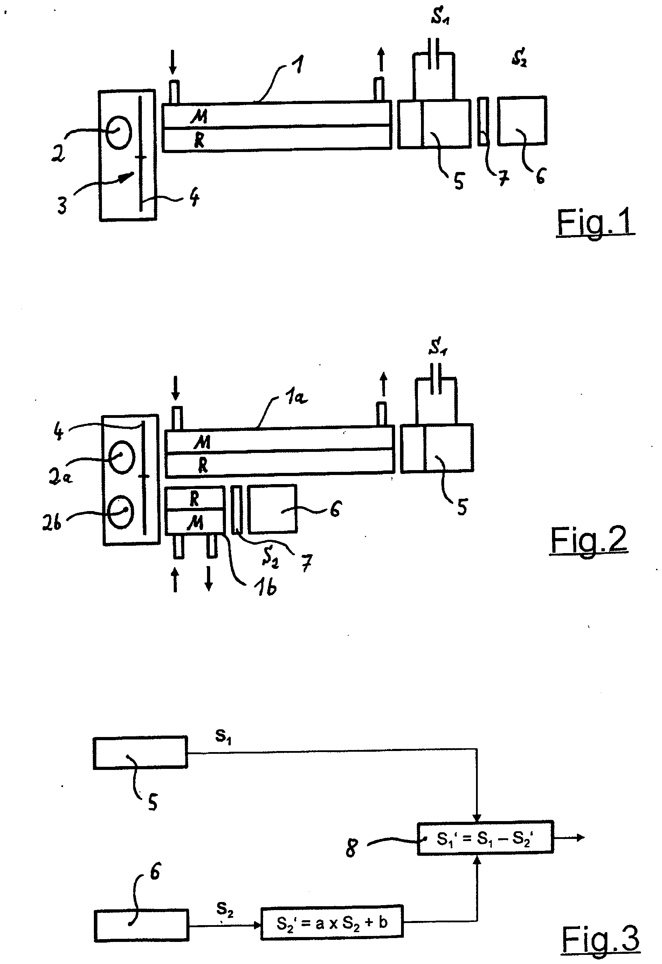

Gemäß Fig. 1 ist in einer rohrförmigen Messküvette 1 der optischen Gasanalysatoreinheit zum einen eine messgasdurchströmte Messkammer M und zum anderen eine mit einem Referenzgas gefüllte Referenzkammer R zur Kalibrierung angeordnet. Die Messküvette 1 wird von einer lichteingangsseitig hieran angeordneten infraroten Strahlungsquelle 2 längs durchleuchtet. Bevor das infrarote Licht in die Messküvette 1 gelangt, passiert dieses eine Modulationseinheit 3 mit rotierender Chopperscheibe 4 zur Phasenumkehr.

Lichtausgangsseitig der Messküvette 1 ist ein opto-pneumatischer Detektor 5 platziert, der den durch Absorptionsverluste abgeschwächten Lichtstrahl erfasst, um ein elektrisches Signal $S_1$ zur nachfolgenden Gaskonzentration zur Analyse nach dem Prinzip der NDIR-Spektroskopie zu erzeugen. Zum Verbessern der Selektivität bei Gasgemischanalysen ist dem opto-pneumatischen Detektor 5 ein Breitbandempfänger 6 nachgeschaltet. Vor dem Breitbandempfänger 6 ist ein optisches Interferenzfilter 7 angeordnet. Der mit dem optischen Interferenzfilter 7 versehene Breitbandempfänger 6 dient zur Erzeugung eines zweiten Signals $S_2$ zur Eliminierung von Störeinflüssen durch Begleitkomponenten im Messgas.

Gemäß der in Fig. 2 dargestellten zweiten Ausführungsform sind zwei parallele Messküvetten 1a und 1b vorgesehen. Lichtausgangsseitig der einen Messküvette 1a ist der opto-pneumatische Detektor 5 angeordnet. Lichtausgangsseitig der anderen Messküvette 1b ist der Breitbandempfänger 6 mit dem vorgeschalteten optischen Interferenzfilter 7 angeordnet. In Konsequenz hieraus sind zwei infrarote Strahlungsquellen 2a und 2b vorgesehen, welche jeweils einer der Messküvetten 1a bzw. 1b zugeordnet sind.

Gemäß Fig. 3 gelangt das vom opto-pneumatischen Detektor 5 ausgegebene, der Erfassung der zu messenden Gaskomponente dienende Signal $S_1$ und ein vom Breitbandempfänger 6 ausgegebenes, proportional zur gemessenen Querempfindlichkeit am opto-pneumatischen Detektor 5 ausgebildetes Signal $S_2$ eingangsseitig an eine elektronische Auswerteeinheit 8. Die elektronische Auswerteeinheit 8 nimmt durch Subtraktion des zweiten Signals $S_2$ vom ersten Signal $S_1$ eine Korrektur des ersten Signals $S_1$ im erfindungsgemäßen Sinne hinsichtlich im Messgas enthaltener Störkomponenten vor, um die im Messgas enthaltenen Störkomponenten zu eliminieren. Im Einzelnen erfolgt dies anhand der nachfolgend erläuterten Funktionsweise:

Ausgegangen wird von einem Messgas, das ein Gemisch aus der Messkomponente, mit der Konzentration ($c_1$), und n Störkomponenten, mit den Konzentrationen ($c_2,...c_{1+n}$), ist. Die spektralen Absorptionskoeffizienten der jeweiligen Gase seien durch $\alpha_i(v)$ gekennzeichnet. Die spektrale optische Transmission durch die im Messgas enthaltenen Störkomponenten $T_{Gas}(v)$ ist nach dem Lambert-Beerschen Gesetz:

$$T_{Gas}(v) = \exp\left(-l \cdot \sum_{i=2}^{1+n} \alpha_i(v) \cdot c_i\right) \qquad (1)$$

wobei I die Länge der Messküvette 1 in der NDIR-Gasanalysatoreinrichtung ist. Die Störkomponenten rufen nun eine Querempfindlichkeit QE am opto-pneumatischem Detektor 5 hervor:

$$QE \sim \int_{v_1}^{v_2} S_{OE}(v) \cdot [1 - T_{Gas}(v)] dv \qquad (2)$$

$S_{OE}$ ist hier die spektrale Empfindlichkeitsfunktion des opto-pneumatischen Detektors 5. Diese ist eine komplizierte Funktion der optischen und thermodynamischen Eigenschaften der Gasfüllung, der geometrischen Abmessungen des Detektors 5, und der Übertragungseigenschaften des sensitiven Elements und lässt sich nicht analytisch darstellen. Der Zusammenhang zwischen der QE und den jeweiligen Gaskonzentrationen liegt aber aus Messungen vor.

Der zusätzliche Breitbandempfänger 6 ist in der Lage, die integrale Absorption des Gasgemisches zu messen:

$$A = \int_{v_1}^{v_2} [1 - T_{Gas}(v)] dv \qquad (3)$$

Wird vor den Breitbandempfänger 6 ein optisches Interferenzfilter 7 mit einer Durchlasskurve $T_{OI}(v)$ eingesetzt, wird die gemessene integrale Absorption zu:

$$A' = \int_{v_1}^{v_2} [1 - T_{Gas}(v)] \cdot T_{OI}(v) dv \qquad (4)$$

Das Ziel ist es nun, $T_{OI}$ so zu definieren, dass A'=QE wird. Dieses gelingt, indem das Interferenzfilter 7 über eine multivariate Datenanalyse spezifisch konzipiert wird.

Dazu wird die spektrale Information, die in Transmissionspektren $T_{Gas}$ der Länge n von m unterschiedlichen Mischungen der Mess- und Störkomponenten enthalten ist (darstellbar als nxm-Matrix $T_{Gas}$), durch eine Hauptkomponentenanalyse auf die Information in Richtung weniger k Hauptkomponenten, die die Achsen eines neuen Koordinatensystems bilden, reduziert (darstellbar als kxn-Matrix P). Die Matrix P wird gewöhnlich auch als "loading matrix" bezeichnet. Der Zusammenhang zwischen QE (für m unterschiedliche Mischungen ist das ein Vektor der Länge m) und den Koordinaten in Richtung der Hauptkomponenten wird über eine Regressionsanalyse (principal component regression, PCR) hergestellt. Die k Regressionskoeffizienten (im Vektor b) sind hierbei diejenigen Gewichte, welche die Amplitude des Fehlervektors e minimieren.

$$QE = (1 - T_{Gas}) \cdot P \cdot b + e \qquad (5)$$

$T_{OI}$, als Vektor mit der gleichen Länge n wie die Spektren der Gasmischungen, ergibt sich damit aus:

$$T_{OI} = P \cdot b \qquad (6)$$

Die Erfindung ist nicht beschränkt auf die vorstehend beschriebenen bevorzugten Ausführungsbeispiele. Es sind auch Abwandlungen hiervon denkbar, die vom Schutzbereich der nachfolgenden Ansprüche mit umfasst sind. So ist es beispielsweise auch möglich, Messküvetten ohne Referenzkammer R zu verwenden, sofern die Kalibrierung der Gasanalysatoreinrichtung auf eine andere Weise durchgeführt wird.

**Bezugszeichenliste**

1    Messküvette
2    Strahlungsquelle
3    Modulationseinheit
4    Shopperscheibe
5    opto-pneumatischer Detektor

6      Breitbandempfänger
7      optisches Interferenzfilter
8      elektronische Auswerteeinheit

## Patentansprüche

1. Optische Gasanalysatoreinrichtung, umfassend mindestens eine in zumindest einer rohrförmigen Messküvette (1; 1a, 1b) ausgebildeten messgasdurchströmten Messkammer (M), welche mindestens eine eingangsseitig angeordnete infrarote Strahlungsquelle (2; 2a, 2b) längs durchleuchtet, deren durch Absorptionsverluste abgeschwächter Lichtstrahl mindestens ein ausgangsseitig angeordneter opto-pneumatischer Detektor (5) zur Gaskonzentrationsanalyse nach dem Prinzip der NDIR-Spektroskopie erfasst, wobei optische Mittel zum Verbessern der Selektivität bei Gasgemischanalysen vorgesehen sind,
wobei die optischen Mittel zum Verbessern der Selektivität einen der Messküvette (1, 1a, 1b) nachgeordneten Breitbandempfänger (6) mit einem vorgeschalteten optischen Interferenzfilter (7), welches als mehrere Durchlassbereiche nach einem vorbestimmten Muster aufweisendes Multivariate Optical Element (MOE) ausgebildet ist, umfasst der zusätzlich zum opto-pneumatischer Detektor (5) zum Einsatz kommt, um Störeinflüsse durch Begleitkomponenten im Messgas zu unterdrücken.

2. Optische Gasanalysatoreinrichtung nach Anspruch 1,
**dadurch gekennzeichnet, dass** der Breitbandempfänger (6) als ein pyroelektrischer Detektor ausgebildet ist.

3. Optische Gasanalysatoreinrichtung nach Anspruch 1,
**dadurch gekennzeichnet, dass** ein vom opto-pneumatischen Detektor () ausgegebenes, der Erfassung der zu messenden Gaskomponente dienendes erstes Signal (S1) und ein vom Breitbandempfänger () ausgegebenes, proportional zur gemessenen Querempfindlichkeit am opto-pneumatischen Detektor () ausgebildetes zweites Signal (S2) eingangsseitig an eine elektronische Auswerteeinheit (8) zur Korrektur des ersten Signals (S1) mit Hilfe des zweiten Signals (S2) geleitet sind.

4. Optische Gasanalysatoreinrichtung nach Anspruch 1,
**dadurch gekennzeichnet, dass** die mindestens eine Messküvette (1; 1a, 1b) längs neben der messgasdurchströmten Messkammer (M) eine mit einem Referenzgas gefüllte Referenzkammer (R) zur Kalibrierung aufweist.

5. Optische Gasanalysatoreinrichtung nach Anspruch 4,
**dadurch gekennzeichnet, dass** eine einzige Messküvette (1) vorgesehen ist, an deren lichtausgangsseitigem Ende der opto-pneumatische Detektor (5) angeordnet ist, welchem der Breitbandempfänger (6) mit dem vorgeschalteten optischen Interferenzfilter (7) in Lichtstrahlrichtung folgt.

6. Optische Gasanalysatoreinrichtung nach Anspruch 4,
**dadurch gekennzeichnet, dass** zwei parallele Messküvetten (1a, 1b) vorgesehen sind, wobei lichtausgangsseitig an der einen Messküvette (1a) der opto-pneumatische Detektor (5) angeordnet ist, wogegen lichtausgangsseitig an der anderen Messküvette (1b) der Breitbandempfänger (6) mit dem vorgeschalteten optischen Interferenzfilter (7) angeordnet ist.

7. Optische Gasanalysatoreinrichtung nach Anspruch 1,
**dadurch gekennzeichnet, dass** die eine Messküvette (1a) länger als die andere Messküvette (1b) ausgebildet ist.

8. Optische Gasanalysatoreinrichtung nach Anspruch 1,
**dadurch gekennzeichnet, dass** die lichteingangsseitig der mindestens einen Messküvette (1; 1a, 1b) angeordnete infrarote Strahlungsquelle (2) eine Modulationseinheit (3) mit rotierender Chopperscheibe (4) zur Phasenumkehr aufweist.

## Claims

1. Optical gas analyser device, comprising at least one measurement chamber (M), through which measurement gas flows and which is formed in at least one tubular measurement cuvette (1; 1a, 1b) and which is illuminated longitudinally by means of at least one infrared radiation source (2; 2a, 2b) arranged on the input side, the light beam of which, attenuated by absorption losses, is captured for gas concentration analysis according to the principle of NDIR spectroscopy by at least one opto-pneumatic detector (5) arranged on the output side, wherein optical means for improving the selectivity in gas mixture analyses are provided,
wherein the optical means for improving the selectivity comprise a broadband receiver (6), arranged downstream of the measurement cuvette (1, 1a, 1b), with an upstream optical interference filter (7), which filter is formed as a multivariate optical element (MOE) having a plurality of passbands according to a predetermined pattern, which receiver is used in addition to the opto-pneumatic detector (5), in order to suppress disturbing influences from accompanying components in the measurement gas.

2. Optical gas analyser device according to Claim 1, **characterized in that** the broadband receiver (6) is formed as a pyroelectric detector.

3. Optical gas analyser device according to Claim 1, **characterized in that** a first signal (S1), output by the opto-pneumatic detector (5) and serving to detect the gas component to be measured, and a second signal (S2), output by the broadband receiver (6) and formed proportional to the measured cross-sensitivity at the opto-pneumatic detector (5), are conducted on the input side to an electronic evaluation unit (8) for correcting the first signal (S1) with the aid of the second signal (S2).

4. Optical gas analyser device according to Claim 1, **characterized in that** the at least one measurement cuvette (1; 1a, 1b) has a reference chamber (R) for calibration filled with a reference gas, longitudinally next to the measurement chamber (M) through which measurement gas flows.

5. Optical gas analyser device according to Claim 4, **characterized in that** a single measurement cuvette (1) is provided, the opto-pneumatic detector (5) being arranged at the light output-side end thereof, which detector is followed in the light beam direction by the broadband receiver (6) with the upstream optical interference filter (7).

6. Optical gas analyser device according to Claim 4, **characterized in that** two parallel measurement cuvettes (1a, 1b) are provided, wherein the opto-pneumatic detector (5) is arranged on the light output side at one measurement cuvette (1a), whereas the broadband receiver (6) with the upstream optical interference filter (7) is arranged on the light output side at the other measurement cuvette (1b).

7. Optical gas analyser device according to Claim 1, **characterized in that** one measurement cuvette (1a) is formed as longer than the other measurement cuvette (1b).

8. Optical gas analyser device according to Claim 1, **characterized in that** the infrared radiation source (2) arranged on the light input side of the at least one measurement cuvette (1; 1a, 1b) has a modulation unit (3) having a rotating chopper disk (4) for phase inversion.

## Revendications

1. Installation optique d'analyse de gaz, comprenant au moins une chambre de mesure (M) traversée par un gaz de mesure, qui est formée dans au moins une cuvette de mesure tubulaire (1 ; 1a, 1b) et qui projette longitudinalement au moins une source de rayonnement infrarouge (2 ; 2a, 2b) disposée du côté de l'entrée, dont le faisceau lumineux, atténué par des pertes par absorption, est détecté par au moins un détecteur opto-pneumatique (5) disposé du côté de la sortie pour l'analyse de la concentration de gaz selon le principe de la spectroscopie NDIR, dans laquelle il est prévu des moyens optiques destinés à améliorer la sélectivité lors d'analyses de mélanges de gaz,
dans laquelle les moyens optiques destinés à améliorer la sélectivité comprennent un récepteur à large bande (6) monté en aval de la cuvette de mesure (1, 1a, 1b) avec un filtre d'interférence optique (7) monté en amont, qui est réalisé sous la forme d'un élément optique multivarié (MOE) présentant plusieurs zones transmissives suivant un motif prédéterminé, et qui est utilisé en plus du détecteur opto-pneumatique (5) afin de supprimer les influences perturbatrices de constituants présents dans le gaz de mesure.

2. Installation optique d'analyse de gaz selon la revendication 1, **caractérisée en ce que** le récepteur à large bande (6) est réalisé sous la forme d'un détecteur pyroélectrique.

3. Installation optique d'analyse de gaz selon la revendication 1, **caractérisée en ce qu'**un premier signal (S1) délivré par le détecteur opto-pneumatique (5) et servant à détecter le constituant gazeux à mesurer, et un second signal (S2) délivré par le récepteur à large bande (6) et conçu pour être proportionnel à la sensibilité transversale mesurée au niveau du détecteur opto-pneumatique (5) sont acheminés du côté de l'entrée vers une unité électronique d'évaluation (8) pour corriger le premier signal (S1) à l'aide du second signal (S2).

4. Installation optique d'analyse de gaz selon la revendication 1, **caractérisée en ce que** ladite au moins une cuvette de mesure (1 ; 1a, 1b) comporte, longitudinalement à côté de la chambre de mesure (M) traversée par le gaz de mesure, une chambre de référence (R) servant à l'étalonnage, remplie d'un gaz de référence.

5. Installation optique d'analyse de gaz selon la revendication 4, **caractérisée en ce qu'**il est prévu une cuvette de mesure (1) unique, à l'extrémité de sortie de lumière de laquelle est disposé le détecteur opto-pneumatique (5), qui est suivi dans la direction du faisceau lumineux par le récepteur à large bande (6) avec le filtre d'interférence optique (7) monté en amont.

6. Installation optique d'analyse de gaz selon la revendication 4, **caractérisée en ce qu'**il est prévu deux cuvettes de mesure parallèles (1a, 1b), dans laquelle le détecteur opto-pneumatique (5) est disposé du côté de la sortie de lumière sur ladite cuvette de mesure (la), tandis que le récepteur à large bande (6), avec le filtre d'interférence optique (7) monté en amont, est disposé du côté de la sortie de lumière sur l'autre cuvette de mesure (1b).

7. Installation optique d'analyse de gaz selon la revendication 1, **caractérisée en ce que** ladite cuvette de mesure (1a) est plus longue que l'autre cuvette de mesure (1b).

8. Installation optique d'analyse de gaz selon la revendication 1, **caractérisée en ce que** la source de rayonnement infrarouge (2) disposée du côté de l'entrée de lumière de ladite au moins une cuvette de mesure (1 ; 1a, 1b) comporte une unité de modulation (3) munie d'un disque hacheur rotatif (4) pour l'inversion de phase.

$S_1$

$S_2$

2

3

1

M

R

4

5

7

6

## Fig.1

$S_1$

4

2a

2b

1a

M

R

R

M

$S_2$

1b

6

7

5

## Fig.2

5

$S_1$

6

$S_2$

$S_2' = a \times S_2 + b$

8

$S_1' = S_1 - S_2'$

## Fig.3

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3937141 A1
- DE 102004031643 A1
- DE 19735716 A1
- US 4355233 A